# EUROPEAN PATENT APPLICATION

(11) **EP 3 431 929 A1**
(43) Date of publication of application: **23.01.2019**
(21) Application number: 18181488.0
(22) Date of filing: 03.07.2018
(51) Int. Cl.: G01C 21/26, B60W 30/16, G05D 1/02, G08G 1/00

(54) **AUTOMATED VEHICLE GUIDANCE SYSTEM**

(30) Priority: 18.07.2017 US 201715652403
(71) Applicant: Aptiv Technologies Limited, St. Michael (BB)
(72) Inventor: LAUR, Michael, H, MISSION VIEJO, CALIFORNIA 92692 (US); DUN, Wu, SUNNYVALE, CALIFORNIA 94085 (US)
(74) Representative: Robert, Vincent

(57) **Abstract**

A guidance system (10) for automated vehicles includes a lead-vehicle (12) on a travel-lane (18) of a roadway (16). The lead-vehicle (12) is equipped with a transmitter (28) that broadcasts a guidance-message (30) indicative of when the lead-vehicle (12) intends to discontinue following the travel-lane (18) presently traveled by the lead-vehicle (12). The system (10) also includes a following-vehicle (14) equipped with a receiver (34) that receives the guidance-message (30). The following-vehicle (14) follows the lead-vehicle (12) until the guidance-message (30) is received.

## Description

### TECHNICAL FIELD OF INVENTION

This disclosure generally relates to a guidance system for automated vehicles, and more particularly relates to a system where a following-vehicle follows a lead-vehicle until the lead-vehicle broadcasts a guidance-message indicating that the lead-vehicle intends to discontinue following a travel-lane presently followed by the lead-vehicle.

### BACKGROUND OF INVENTION

It has been suggested that an automated vehicle could use the relative position of another-vehicle forward of the automated vehicle as guidance for lane positioning. This following of a lead-vehicle by an automated following-vehicle behind the lead-vehicle may be advantageous in various circumstances such as when, for example, lane-markings are obscured by snow or when the lane-markings have been removed during construction/repair of the roadway traveled by the following-vehicle, or as a supplement to global-positioning-system (GPS) guidance. However, in some circumstances it may be preferable if the following-vehicle discontinue following the lead-vehicle.

### SUMMARY OF THE INVENTION

In accordance with one embodiment, a guidance system for automated vehicles is provided. The system includes a lead-vehicle on a travel-lane of a roadway. The lead-vehicle is equipped with a transmitter that broadcasts a guidance-message indicative of when the lead-vehicle intends to discontinue following the travel-lane.

The system may include a following-vehicle equipped with a receiver that receives the guidance-message. The following-vehicle follows the lead-vehicle until the guidance-message is received. The lead-vehicle may be equipped with a lane-detector that indicates a lane-position of the lead-vehicle in the travel-lane, said lane-position characterized by a confidence-level, said confidence-level broadcast by the transmitter while the lead-vehicle follows the travel-lane, and the following-vehicle follows the lead-vehicle when the confidence-level is greater than a confidence-threshold. The lead-vehicle may be equipped with a lane-detector that indicates a lane-position of the lead-vehicle in the travel-lane, said lane-position characterized by a confidence-level, said confidence-level broadcast by the transmitter while the lead-vehicle follows the travel-lane, and the following-vehicle increases a following-distance that the following-vehicle is behind the lead-vehicle when the confidence-level is less than a confidence-threshold. The lead-vehicle may be equipped with a lane-detector that indicates a lane-position of the lead-vehicle in the travel-lane, said lane-position characterized by a confidence-level said confidence-level broadcast by the transmitter while the lead-vehicle follows the travel-lane, the following-vehicle is equipped with a vehicle-detector that detects an other-vehicle different from the lead-vehicle, said other-vehicle in an other-lane different from the travel-lane, and the following-vehicle changes lanes to follow the other-vehicle when the confidence-level is less than a confidence-threshold.

The lead-vehicle may be equipped with an object-detector that detects an object in the travel-lane, the transmitter broadcasts a deviation-message when the lead-vehicle intends to deviate from the travel-lane to avoid the object, and the following-vehicle follows the lead-vehicle to avoid the object when the deviation-message is received.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is diagram of a guidance system in accordance with one embodiment;
Fig. 2 is a traffic-scenario encountered by the system of Fig. 1 in accordance with one embodiment; and
Fig. 3 is a traffic-scenario encountered by the system of Fig. 1 in accordance with one embodiment.

### DETAILED DESCRIPTION

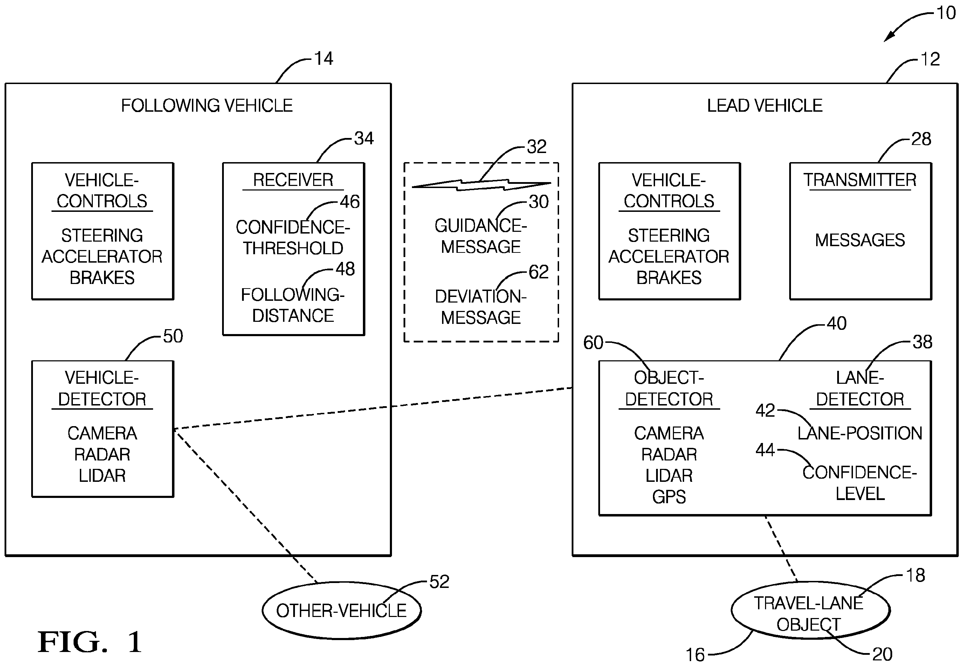

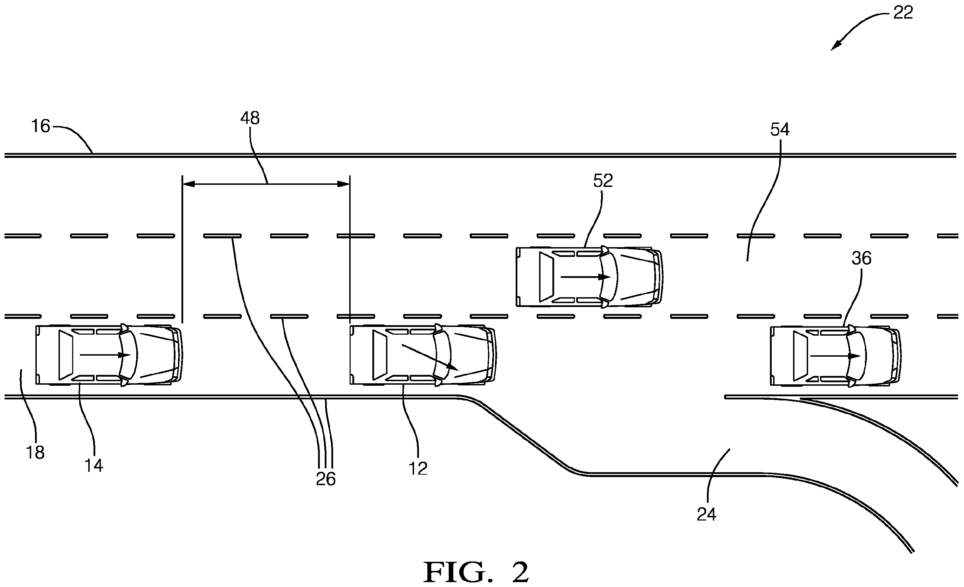

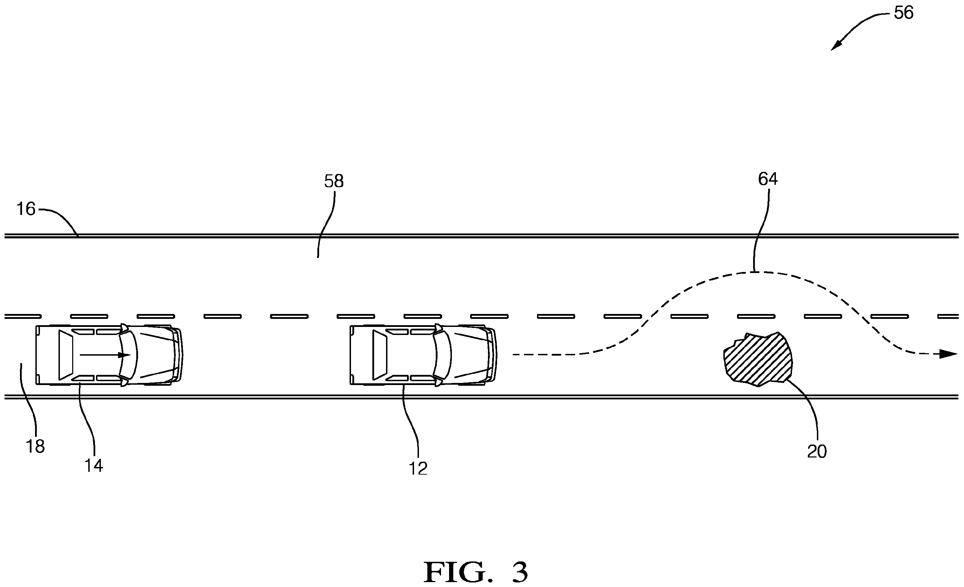

Fig. 1 illustrates a non-limiting example of a guidance system 10, hereafter referred to as the system 10, which is suitable for use on an automated vehicle, e.g. a lead-vehicle 12 and/or a following-vehicle 14. As will be described in more detail below by way of non-limiting examples, for the most part the following-vehicle 14 generally follows the lead-vehicle 12 while traveling on a roadway 16 (Fig. 2 and 3). That is, the following-vehicle 14 generally makes use of the position of the lead-vehicle 12 on a travel-lane 18 of the roadway 16 to determine how to operate the steering, accelerator, and/or brakes of the following-vehicle 14. It is not a requirement that the following-vehicle 14 relies entirely on the lead-vehicle 12 for guidance, but this condition is not excluded. That is, the following-vehicle 14 may be fully equipped to travel the roadway 16 without making use of the position of the lead-vehicle 12 on a travel-lane 18, and only uses the position of the lead-vehicle 12 as supplemental information to operate the steering, accelerator, and/or brakes of the following-vehicle 14. However, it is also contemplated that unusual situations may arise when the position of the lead-vehicle 12 on a travel-lane 18 may be the only information available to the following-vehicle 14 to determine how to operate the steering, accelerator, and/or brakes of the following-vehicle 14.

As used herein, the term automated vehicle may apply to instances when the lead-vehicle 12 and/or the following-vehicle 14 is/are being operated in an automated-mode, i.e. a fully autonomous mode, where a human-operator(s) (not shown) of the lead-vehicle 12 and/or the following-vehicle 14 may do little more than designate a destination in order to operate the lead-vehicle 12 and/or the following-vehicle 14. However, full automation is not a requirement. It is contemplated that the teachings presented herein are useful when the lead-vehicle 12 and/or the following-vehicle 14 is/are operated in a manual-mode where the degree or level of automation may be little more than providing an audible or visual warning to a human-operator who is generally in control of the steering, accelerator, and brakes of the lead-vehicle 12 and/or the following-vehicle 14. For example, the system 10 may merely assist the human-operator as needed to change lanes and/or avoid interference with and/or a collision with, for example, an object 20 such as refuse on the roadway 16.

Fig. 2 illustrates a non-limiting example of an instance of a traffic-scenario 22 where the lead-vehicle 12 is about to exit the roadway 16. In this example the roadway is a three-lane expressway where all lanes are traveling in the same direction. It has been observed that in some circumstances the following-vehicle 14 will follow the lead-vehicle 12 onto the exit-ramp 24 even though the exit-ramp 24 is not part of a route to a destination of the following-vehicle 14. For example, if the lane-markings 26 are obscured by snow, the following-vehicle 14 may be, at least momentarily, very reliant on the lead-vehicle 12 for guidance, so may undesirably follow the lead-vehicle 12 onto the exit-ramp 24 rather than remain on the roadway 16 which is necessary to reach the destination.

To overcome this problem, and with reference to Fig. 1, the lead-vehicle 12 is equipped with a transmitter 28 that may broadcast a signal 32 that may include or convey a variety of messages, including a guidance-message 30 indicative of when the lead-vehicle 12 intends to discontinue following the travel-lane 18, and for example follow the exit-ramp 24. It is contemplated that the guidance-message 30 may only be broadcast when the lead-vehicle 12 is about to do anything other than stay in the travel-lane 18, or the guidance-message 30 may be broadcast on a periodic basis even if only to report that the lead-vehicle 12 intends to continue following the travel-lane 18 for an indefinite time.

Accordingly, the following-vehicle 14 is equipped with a receiver 34 that detects the signal 32 and thereby receives the guidance-message 30. In the embodiment where the guidance-message 30 is only broadcast when the lead-vehicle 12 is about to exit the roadway 16, then the following-vehicle 14 may be configured or programmed to follow the lead-vehicle 12 until the guidance-message 30 is received. In the embodiment where the guidance-message 30 is broadcast on a periodic basis, then the following-vehicle 14 may be configured or programmed to follow the lead-vehicle 12 until a guidance-message 30 indicating that the lead-vehicle 12 is exiting is received.

While some may interpret Fig. 1 as suggesting that the lead-vehicle 12 and the following-vehicle 14 are distinctly or differently configured, this is only to simplify the illustration. For example, it is contemplated that both the lead-vehicle 12 and the following-vehicle 14 are each equipped with a transceiver that provides the function of both the transmitter 28 and the receiver 34. As such, while the following-vehicle 14 is characterized as following the lead-vehicle 12, the lead-vehicle 12 may also be following a next-vehicle 36 traveling forward of the lead-vehicle 12. Similarly, the following-vehicle 14 may be followed by a trailing-vehicle (not shown) traveling the roadway 16 or the travel-lane 18 behind the following-vehicle 14.

Those in the art will recognize that the lead-vehicle 12 and the following-vehicle 14 may each be equipped with a controller, which is not shown only to further simplify the illustration. The controller may include a processor such as a microprocessor or other control circuitry such as analog and/or digital control circuitry including an application specific integrated circuit (ASIC) for processing data as should be evident to those in the art. The controller may include memory, including non-volatile memory, such as electrically erasable programmable read-only memory (EEPROM) for storing one or more routines, thresholds, and captured data. The one or more routines may be executed by the processor to perform steps for determining how to operate the transmitter 28 or operate the vehicle-controls based on signals received by the controller from the receiver 34 or perception-sensors 40 (e.g. camera, radar, lidar, GPS, ultrasonic-transducer) and/or a digital-map database as described elsewhere herein.

It is further contemplated that the messages broadcast by the transmitter 28 may include other information useful to the following-vehicle. For example, the lead-vehicle 12 may be equipped with a lane-detector 38 that indicates a lane-position 42 of the lead-vehicle 12 in the travel-lane 18. It is also contemplated that the lane-detector 38 may include or have access to a digital-map that is used to determine the lane-position 42 based on a comparison of a relative location of an object detected by the lane-detector to a mapped-location of that object on the digital-map. The lane-position 42 may be indicated in terms of how far away is the lead-vehicle 12 from the center of the travel-lane 18. The lead-vehicle 12 may deliberately operate off-center for a number of reasons such as when the lead-vehicle is preparing to drive past a stalled-vehicle (not shown) parked on the shoulder of the roadway 16. The lane-position 42 may be characterized by a confidence-level 44 that may be indicative of, for example, the contrast of the lane-markings 26 relative to the surface of the roadway 16. That is, the confidence-level 44 is an indicator of how confident the lead-vehicle 12 is about where is the center of the travel-lane 18. By contrast, if the lane-markings 26 are of poor contrast, or are obscured by snow, the confidence-level 44 may be relatively low.

The confidence-level 44 may be broadcast by the transmitter 28 while the lead-vehicle 12 intends to continue following the travel-lane 18. The following-vehicle 14 may be configured or programmed to only follow the lead-vehicle 12 when the confidence-level 44 is greater than a confidence-threshold 46. That is, the following-vehicle 14 may rely more strongly on other information to operate the vehicle-controls of the following-vehicle 14 when the confidence-level is less than the confidence-threshold 46. It is also contemplated that the confidence-level 44 may only be broadcast when the confidence-level is greater than or less than some threshold in order to minimize the time that the signal 32 is being transmitted and thereby not unnecessarily contribute to electromagnetic-noise or unnecessarily high data rates. For example, the confidence-level 44 may only be broadcast when the confidence-level 44 is relatively low as a warning to others to not follow the lead-vehicle 12 if other sources of information are available.

As a precaution for when the confidence-level 44 is relatively low, less than the confidence-threshold 46 for example, the following-vehicle 14 may be configured or programmed to increase a following-distance 48 that the following-vehicle 14 trails or is behind the lead-vehicle 12. This is may increase the field-of-view of perception-sensors on the following-vehicle 14 and/or increase collision avoidance options available to the following-vehicle 14 if the lead-vehicle 12 performs some unexpected maneuver.

A possible reason for the confidence-level 44 of the lead-vehicle 12 to be relatively low is that the perception-sensors 40 of the lead-vehicle 12 may be malfunctioning or 'blinded' by dirt, mud, and/or ice. That is, the cause of the confidence-level 44 being low may not be due to the lane-markings 26 being difficult to discern by any other vehicles, but only due to a problem with the perception-sensors 40. In this situation, it may be prudent for the following-vehicle 14 to find some other vehicle to follow. As such, the following-vehicle 14 may be equipped with a vehicle-detector 50 that detects a relative-position of an other-vehicle 52 different from the lead-vehicle 12, where the other-vehicle 52 may be in an other-lane 54 different from (e.g. adjacent to) the travel-lane 18. The following-vehicle 14 may then change lanes to follow the other-vehicle 52 when the confidence-level 44 is less than the confidence-threshold 46. Following the other-vehicle 52 may also be an option if the lead-vehicle 12 exits the roadway 16. However, it is contemplated that the following-vehicle 14 does not necessarily need to change lanes to follow the other-vehicle 52 if the lead-vehicle exits the roadway 16. For example, the following-vehicle 14 may determine that the other-vehicle 52 is traveling in a lane adjacent to the travel-lane, and control the relative position of the following-vehicle 14 with respect to the other-vehicle 52 accordingly.

The other-vehicle 52 may equipped with a transceiver (not shown) similar to the aforementioned combination of the transmitter 28 and the receiver 34, and includes sensors similar to those that make up the perception-sensors, but this is not a requirement. That is, the following-vehicle 14 may follow the other-vehicle 52 when following the lead-vehicle 12 is not preferred because the confidence-level 44 is less than the confidence-threshold 46 even if the other-vehicle 52 is not equipped with a transceiver or the necessary sensors for the other-vehicle 52 to be operated in an automated or autonomous mode.

Fig. 3 illustrates a non-limiting example of another instance of a traffic-scenario 56 where the roadway 16 may be a typical rural two-lane road with an opposing-lane 58 where traffic (not shown) traveling in the opposite direction as the travel-lane 18. The perception-sensors 40 of the lead-vehicle 12 may include an object-detector 60 that may share a camera, radar, lidar, ultrasonic-transducer, or any combination thereof with the lane-detector 38. The object-detector 60 may be used to detect a variety of objects such as another vehicle in the travel-lane or the opposing-lane of the roadway 16 or a stationary object depicted or identified on a digital-map to localize the vehicles with respect to the digital-map. In this example, the object-detector 60 is used to detect an object 20 (e.g. debris, tumble-weed, etc.) in the travel-lane 18. If the object 20 is of a size and/or composition that makes it preferable for the lead-vehicle 12 to avoid, i.e. not run-over, the lead-vehicle 12, the transmitter 28 broadcasts a deviation-message 62 when the lead-vehicle 12 intends to deviate from the travel-lane 18 to avoid the object 20. That is, the deviation-message 62 may indicate when the lead-vehicle 12 intentionally deviates from the center of the travel-lane 18, and may indicate how far will be the deviation from the center of the travel-lane. As suggested in Fig. 3, an avoidance-path 64 of the lead-vehicle 12 to avoid the object may include the lead-vehicle 12 momentarily traveling in the opposing-lane 58.

When the deviation-message 62 is received by the receiver 34, the following-vehicle 14 may follow the avoidance-path 64 of the lead-vehicle 12 to avoid the object 20 when the deviation-message 62 is received. The following-vehicle 14 may follow the avoidance-path 64 precisely, or may take an alternate-path (not shown) if, for example, opposing traffic is present when the following-vehicle 14 approaches the object 20, or the size of the following-vehicle 14 with respect to the lead-vehicle 12 allows for an alternate-path that does not precisely follow the avoidance-path 64.

Accordingly, a guidance system (the system 10), a controller for the system 10, and a method of operating the system 10 are provided. Features of the system 10 help to avoid situations when the lead-vehicle 12 should not be followed by the following-vehicle, and provides a means by which the lead-vehicle 12 can provide a notice that a deviation from the travel-lane 18 is due to the need to avoid an object 20.

While this invention has been described in terms of the preferred embodiments thereof, it is not intended to be so limited, but rather only to the extent set forth in the claims that follow.

## Claims

1. A guidance system (10) for automated vehicles, said system (10) comprising:
a lead-vehicle (12) on a travel-lane (18) of a roadway (16), said lead-vehicle (12) equipped with a transmitter (28) that broadcasts a guidance-message (30) indicative of when the lead-vehicle (12) intends to discontinue following the travel-lane (18).

2. The system (10) in accordance with claim 1, said system (10) further comprising
a following-vehicle (14) equipped with a receiver (34) that receives the guidance-message (30), wherein the following-vehicle (14) follows the lead-vehicle (12) until the guidance-message (30) is received.

3. The system (10) in accordance with claim 2, wherein the lead-vehicle (12) is equipped with a lane-detector (38) that indicates a lane-position (42) of the lead-vehicle (12) in the travel-lane (18), said lane-position (42) **characterized by** a confidence-level (44), said confidence-level (44) broadcast by the transmitter (28) while the lead-vehicle (12) follows the travel-lane (18), and the following-vehicle (14) follows the lead-vehicle (12) when the confidence-level (44) is greater than a confidence-threshold (46).

4. The system (10) according to any one of the claims 2 or 3, wherein the lead-vehicle (12) is equipped with a lane-detector (38) that indicates a lane-position (42) of the lead-vehicle (12) in the travel-lane (18), said lane-position (42) **characterized by** a confidence-level (44), said confidence-level (44) broadcast by the transmitter (28) while the lead-vehicle (12) follows the travel-lane (18), and the following-vehicle (14) increases a following-distance (48) that the following-vehicle (14) is behind the lead-vehicle (12) when the confidence-level (44) is less than a confidence-threshold (46).

5. The system (10) according to any one of the claims 2 or 3, wherein the lead-vehicle (12) is equipped with a lane-detector (38) that indicates a lane-position (42) of the lead-vehicle (12) in the travel-lane (18), said lane-position (42) **characterized by** a confidence-level (44), said confidence-level (44) broadcast by the transmitter (28) while the lead-vehicle (12) follows the travel-lane (18), the following-vehicle (14) is equipped with a vehicle-detector (50) that detects an other-vehicle (52) different from the lead-vehicle (12), said other-vehicle (52) in an other-lane (54) different from the travel-lane (18), and the following-vehicle (14) changes lanes to follow the other-vehicle (52) when the confidence-level (44) is less than a confidence-threshold (46).

6. The system (10) in accordance with claim 2, wherein the lead-vehicle (12) is equipped with an object-detector (60) that detects an object (20) in the travel-lane (18), the transmitter (28) broadcasts a deviation-message (62) when the lead-vehicle (12) intends to deviate from the travel-lane (18) to avoid the object (20), and the following-vehicle (14) follows the lead-vehicle (12) to avoid the object (20) when the deviation-message (62) is received.
